# EUROPEAN PATENT SPECIFICATION

(11) **EP 3 777 553 B1**
(45) Date of publication and mention of the grant of the patent: **10.09.2025**
(21) Application number: 18914912.3
(22) Date of filing: 10.04.2018
(51) Int. Cl.: A23L 2/00, C12C 5/02, C12C 12/02, C12G 3/025, C12G 3/06, A23L 2/54, A23L 19/00, C12C 12/04, A23L 27/12, A23L 2/56, A23L 2/06

(54) **BEER-TASTE BEVERAGE AND PRODUCTION METHOD THEREOF**
GETRÄNK MIT BIERGESCHMACK UND VERFAHREN ZU SEINER HERSTELLUNG
BOISSON AU GOÛT DE BIÈRE ET SON PROCÉDÉ DE FABRICATION

(43) Date of publication of application: 17.02.2021
(73) Proprietor: Suntory Holdings Limited, Osaka 530-8203 (JP)
(72) Inventor: INUI, Takako, Mishima-gun, Osaka 618-0001 (JP); YONEZAWA, Daisaku, Soraku-gun, Kyoto 619-0284 (JP)
(74) Representative: Vossius & Partner Patentanwälte Rechtsanwälte mbB
(86) International application number: PCT/JP2018/015046
(87) International publication number: WO 2019/198144

(56) References cited:
- CN-A- 102 391 911
- JP-A- 2008 079 558
- JP-A- 2014 518 510
- JP-A- 2016 123 357
- BHUPESH C ROY ET AL: "Supercritical Carbon Dioxide Extraction of the Volatiles from the Peel of Japanese Citrus Fruits", THE JOURNAL OF ESSENTIAL OIL RESEARCH : JEOR, TAYLOR & FRANCIS, UK, vol. 19, no. 1, February 2007 (2007-02-01), pages 78 - 84, XP008154981, ISSN: 1041-2905, [retrieved on 20111128], DOI: 10.1080/10412905.2007.9699234
- DATABASE GNPD [online] MINTEL; 30 January 2018 (2018-01-30), ANONYMOUS: "Ale with Coriander and Orange Peel", XP055886804, retrieved from https://www.gnpd.com/sinatra/recordpage/5405123/ Database accession no. 5405123
- DATABASE GNPD [online] MINTEL; 5 January 2018 (2018-01-05), ANONYMOUS: "Naranjito Orange Peel Pale Ale", XP055886805, retrieved from https://www.gnpd.com/sinatra/recordpage/5362559/ Database accession no. 5362559
- DATABASE GNPD [online] MINTEL; 30 May 2017 (2017-05-30), ANONYMOUS: "Lemon Peel Beer", XP055886808, retrieved from https://www.gnpd.com/sinatra/recordpage/4853277/ Database accession no. 4853277
- HAWTHORNE, S. B. ET AL.: "Analysis of flavor and fragrance compounds using supercritical fluid extraction coupled with gas chromatography", ANAL. CHEM., vol. 60, 1988, pages 472 - 477, XP002641543, ISSN: 1520-6882

## Description

### TECHNICAL FIELD

The present invention relates to a beer-taste beverage and a method for producing the same.

### BACKGROUND ART

With the diversification of the inclinations of the consumers of the recent years, the development of beer-taste beverages having various flavor characteristics has been desired.

For example, a beer-taste beverage having a citrus plant flavor is provided by including introducing fruit peels of a citrus plant in a sugar liquid of a wort or the like and heating them

Beers aromatized with citrus peel are available on the market (see DATABASE GNPD [Online] MINTEL; 30 January 2018 (2018-01-30), anonymous: "Ale with Coriander and Orange Peel"; DATABASE GNPD [Online] MINTEL; 5 January 2018 (2018-01-05), anonymous: "Naranjito Orange Peel Pale Ale"; DATABASE GNPD [Online] MINTEL; 30 May 2017 (2017-05-30), anonymous: "Lemon Peel Beer").

JP2008079558A (SHIONO KORYO KAISHA) discloses a citrus extract obtained by supercritical CO2 counter extraction of a lemon oil, said extract being used to flavour food products and beers. BHUPESH C ROY ET AL: "Supercritical Carbon Dioxide Extraction of the Volatiles from the Peel of Japanese Citrus Fruits",THE JOURNAL OF ESSENTIAL OIL RESEARCH : JEOR, TAYLOR & FRANCIS, UK, vol. 19, no. 1, February 2007 (2007-02), pages 78-84 discloses a method for extracting essential oil from yuzu peel, comprising extracting a plant extract from yuzu peel with carbon dioxide as an extraction solvent, and separating the plant extract extracted in the extracting step from carbon dioxide. The separating step takes place in a collection tube containing ethanol placed in an ice pot.

### SUMMARY OF THE INVENTION

### PROBLEMS TO BE SOLVED BY THE INVENTION

However, in a conventional method, a flavor has not been well provided such that a flavor having low freshness is provided.

An object of the present invention is to provide a beer-taste beverage provided with a fresh citrus plant flavor, and a method for producing the same.

### MEANS TO SOLVE THE PROBLEMS

The present invention relates to:
(1) A beer-taste beverage, comprising a carbon dioxide-extracting product of a plant raw material comprising fruit peels of a citrus plant, wherein the mass ratio of a content of valencene to a content of nootkatone in the carbon dioxide-extracting product is 9000% or more.
(2) A method for producing a beer-taste beverage as defined above in (1), comprising extracting step: extracting a plant extract from a plant raw material comprising fruit peels of a citrus plant with carbon dioxide as an extraction solvent, separating step: separating the plant extract extracted in the extracting step from carbon dioxide, wherein the temperature in the separating step is 30°C or lower, and adding step: adding a carbon dioxide-extracting product obtained in the separating step during the production steps for a beer-taste beverage.

### EFFECTS OF THE INVENTION

According to the present invention, a beer-taste beverage provided with a fresh citrus plant flavor and a method for producing the same can be provided.

### BRIEF DESCRIPTION OF THE DRAWINGS

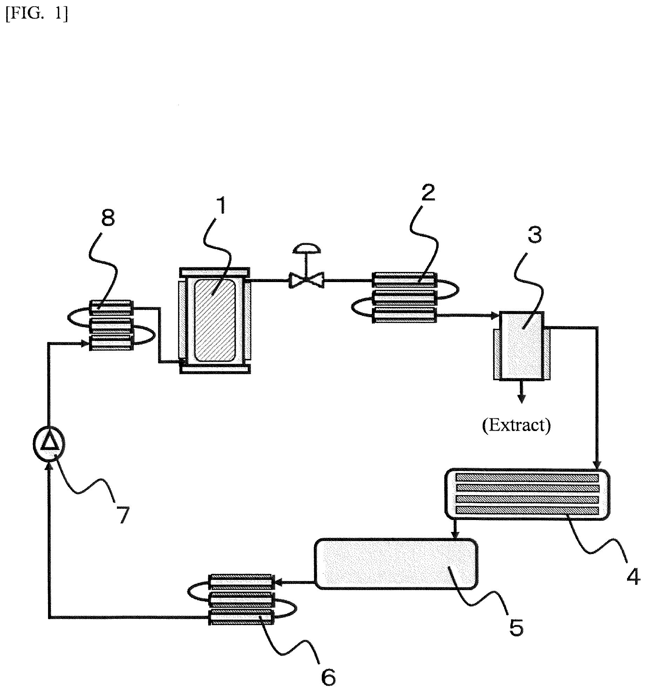

[FIG. 1] Showing a scheme of a carbon dioxide circulation type apparatus used in Preparation Examples 1 to 5.

### MODES FOR CARRYING OUT THE INVENTION

The beer-taste beverage according to the present invention contains a carbon dioxide-extracting product of a plant raw material containing fruit peels of a citrus plant wherein the mass ratio of a content of valencene to a content of nootkatone in the carbon dioxide-extracting product is 9000% or more.

Although the mechanisms of providing a fresh citrus plant flavor in the beer-taste beverage of the present invention are not ascertained, they are assumed to be as follows. A conventional boiling or heating step for extracting an aroma component from hops would not be necessitated by using a carbon dioxide-extracting product in a beer-taste beverage, so that the production of oxides is inhibited, for example, a mass ratio of a content of linalool oxide to a content of linalool in the beverage (linalool oxide/linalool) would be at a lower proportion than that of the conventional method. In the beer-taste beverage obtained by the above conventional method, linalool is likely to be oxidized, so that the beverage would result in a high mass ratio of a content of linalool oxide to a content of linalool (linalool oxide/linalool). This is assumed to be a factor of deteriorating the freshness of flavor.

The plant raw material may at least contain fruit peels of a citrus plant, which may, for example, be raw materials containing fruits, leaves, stems, seeds, and the like other than fruit peels, or may be raw materials containing a plant other than a citrus plant.

The fruit peels of a citrus plant include, but not particularly limited to, for example, orange (*Citrus sinensis*) peels, grapefruit peels, yuzu (*Citrus junos*) peels, lemon peels, lime peels, *Mandarin* (*Citrus unshiu*) peels, daidai (*Citrus aurantium*) peels, kabosu (*Citrus sphaerocarpa*) peels, shequasar (*Citrus depressa*), Japanese kinkan peels, and the like.

The carbon dioxide-extracting product is obtained by extracting a plant extract from a plant raw material containing fruit peels of a citrus plant with carbon dioxide as an extraction solvent, and separating the extracted plant extract from carbon dioxide. Since the carbon dioxide-extracting product obtained as described above has a low mass ratio of a content of linalool oxide to a content of linalool (linalool oxide/linalool) as mentioned above, it is considered that the extract can provide a beer-taste beverage with a flavor that is less deteriorated in freshness.

In addition, the carbon dioxide-extracting product of a plant raw material containing fruit peels of a citrus plant richly contains a terpene-based hydrocarbon component such as α-pinene, β-pinene, β-myrcene, or limonene, as compared to a conventional case where fruit peels are supplied in a wort, and a mixture is extracted with heating. Therefore, it is considered that the beer-taste beverage can be favorably provided with a juicy flavor characteristic of a citrus plant.

In the case where orange peels are contained as a plant raw material, in addition to α-pinene, β-pinene, β-myrcene, or limonene, the carbon dioxide-extracting product richly contains an orange-like aroma component valencene, so that the extract can favorably provide a beer-taste beverage with an orange-like flavor.

The mass ratio of a content of linalool oxide to a content of linalool in the carbon dioxide-extracting product (linalool oxide/linalool) is preferably 10% or less, and more preferably 5% or less, from the viewpoint of providing a fresh citrus plant flavor. The lower limit may be, but not particularly limited to, 1% or more, and 1.5% or more. The linalool oxide as used herein refers to a total amount of cis-linalool oxide and trans-linalool oxide.

The content of linalool in the carbon dioxide-extracting product is preferably 4,000 ppm or more, more preferably 5,000 ppm or more, and even more preferably 8,000 ppm or more, from the viewpoint of providing a fresh citrus plant flavor. The upper limit may be, but not particularly limited to, 15,000 ppm or less.

The content of linalool oxide in the carbon dioxide-extracting product is preferably 150 ppm or less, more preferably 120 ppm or less, and even more preferably 100 ppm or less, from the viewpoint of providing a fresh citrus plant flavor. The lower limit may be, but not particularly limited to, 10 ppm or more, and 50 ppm.

A total of α-pinene, β-pinene, β-myrcene, and limonene in the carbon dioxide-extracting product is preferably 500,000 ppm or more, more preferably 600,000 ppm or more, and even more preferably 900,000 ppm or more, from the viewpoint of favorably providing a fresh citrus plant flavor. The upper limit may be, but not particularly limited to, 950,000 ppm or less.

In a case where orange peels are contained as a plant raw material, the content of valencene in the carbon dioxide-extracting product, in terms of an extract concentration, is preferably 70,000 ppm or more, more preferably 100,000 ppm or more, and even more preferably 150,000 ppm or more, from the viewpoint of favorably providing an orange-like juicy flavor. The upper limit may be, but not particularly limited to, 250,000 ppm or less.

In a case where orange peels are contained as a plant raw material, the mass ratio of a content of valencene to a content of linalool in the carbon dioxide-extracting product (valencene/linalool) is preferably 1000% or more, more preferably 1500% or more, even more preferably 1700% or more, and even more preferably 1800% or more, from the viewpoint of providing an orange-like flavor in a well-balanced manner. The upper limit can be, but not particularly limited to, 2000% or less.

In a case where orange peels are contained as a plant raw material, the beer-taste beverage according to the present invention has a content of valencene in the beer-taste beverage of preferably 5 ppb or more, more preferably 20 ppb or more, and even more preferably 30 ppb or more, from the viewpoint of favorably providing an orange-like flavor. The upper limit can be, but not particularly limited to, 200 ppb or less.

The mass ratio of a content of valencene to a content of nootkatone (valencene/nootkatone) in the carbon dioxide-extracting product is 9000% or more, preferably 10000% or more, from the viewpoint of even stronger orange juicy taste. The upper limit can be, but not particularly limited to, 20000% or less.

In a case where orange peels are contained as a plant raw material, the mass ratio of a content of valencene to a content of nootkatone (valencene/nootkatone) in the beer-taste beverage is preferably 10% or more, more preferably 100% or more, even more preferably 200% or more, and even more preferably 400% or more, from the viewpoint of even stronger orange juicy taste. The upper limit can be, but not particularly limited to, 500% or less. The ratio of the above two components in the beer-taste beverage greatly differs from the ratio of the two components in the carbon dioxide-extracting product, and this is because the migration rate and the evaporation rate to beer in both the components in the brewing step are different.

The method for producing a beer-taste beverage of the present invention includes
extracting step: extracting a plant extract from a plant raw material containing fruit peels of a citrus plant with carbon dioxide,
separating step: separating the plant extract extracted in the extracting step from carbon dioxide, wherein the temperature in the separating step is 30°C or lower, and
adding step: adding a carbon dioxide-extracting product obtained in the separating step during the production steps for a beer-taste beverage.

In the extracting step, a plant raw material supplied into an extraction tank is contacted with carbon dioxide as an extraction solvent to extract a plant extract in carbon dioxide from the plant raw material. Here, carbon dioxide may be a supercritical carbon dioxide or a liquid carbon dioxide.

The plant raw material subjected to the extracting step is as mentioned above.

S/F (the mass ratio of carbon dioxide to the raw materials) in the extracting step is preferably from 20 to 50, more preferably from 30 to 50, and even more preferably from 40 to 50, from the viewpoint of the amount of yield.

The density of carbon dioxide in the extracting step is preferably from 200 to 1000 kg/m³, more preferably from 300 to 1000 kg/m³, and even more preferably from 700 to 1000 kg/m³, from the viewpoint of the amount of yield.

The pressure of carbon dioxide in the extracting step is preferably from 6 to 50 MPa, more preferably from 6 to 30 MPa, and even more preferably from 6.5 to 9.0 MPa, from the viewpoint of the amount of yield. The pressure of carbon dioxide in the extracting step refers to a pressure inside an extraction tank.

The temperature in the extracting step is preferably from 10°C to 60°C, more preferably from 10°C to 55°C, and even more preferably from 10°C to 50°C, from the viewpoint of the amount of yield and quality. The temperature in the extracting step refers to a temperature inside an extraction tank.

The extraction time is, but not particularly limited to, preferably 1.0 hour or more, more preferably 2.0 hours or more, and even more preferably 3.0 hours or more, from the viewpoint of the amount of yield.

As the extraction tank used in the extracting step, a known one can be used, and, for example, a stainless steel pressurized vessel or the like, which is completely cut off from the external can be used.

In the separating step, the density of carbon dioxide is decreased by lowering a pressure of carbon dioxide or increasing a temperature in the separation tank to make the density of carbon dioxide smaller and to lower its ability as a solvent, thereby separating the plant extract obtained in the extracting step from carbon dioxide.

The pressure of carbon dioxide in the separating step is preferably from 4.0 to 6.0 MPa, more preferably from 4.0 to 5.0 MPa, and even more preferably from 4.5 to 4.8 MPa, from the viewpoint of the amount of yield. The pressure of carbon dioxide in the separating step refers to a pressure inside a separation tank.

The temperature in the separating step is is 30°C or lower, even more preferably 25°C or lower, and even more preferably 20°C or lower, from the viewpoint of the amount of yield. The lower limit can be, but not particularly limited to, for example, 0°C or higher. The temperature in the separating step refers to a temperature inside a separation tank.

As a separation tank used in the separating step, a known one can be used, for example, a stainless steel vessel or the like can be used.

The preferred amount of components and ratio of the carbon dioxide-extracting product obtained in the separating step are as mentioned above.

In the adding step, the carbon oxide extract is added during the production steps for a beer-taste beverage. The carbon dioxide-extracting product obtained in the separating step is obtained in the form of a mixture of an aqueous layer and an oil layer, which may be directly used, or may be centrifuged or the like to obtain only an oil layer in which the aroma is present and used.

In the adding step, as to the addition of the carbon dioxide-extracting product, the carbon dioxide-extracting product can be added at any timing so long the timing is during the production steps for a beer-taste beverage. In a case of having a brewing step, it is preferable that the addition is carried out after the brewing step, from the viewpoint of favorably providing a juicy flavor of a citrus plant. In the present invention, the beer-taste beverage may be a beer-taste beverage containing an alcohol, or a nonalcoholic beer-taste beverage, each of which can be produced by a known production method. The methods of production in each of the cases will be exemplified hereinbelow, without intending to limit the present invention to these embodiments.

One embodiment of the beer-taste beverage according to the present invention includes a beer-taste beverage containing an alcohol, which can be produced in the same manner as in general beer-taste beverages, except that a carbon dioxide-extracting product obtained in the separating step is added during the production steps for a beer-taste beverage. In addition, the alcohol as used herein refers to ethanol, and the ethanol content, in terms of a volume ratio, is, but not particularly limited to, preferably from 1% to 10%. Further, the origin of the alcohol component contained in the beer-taste beverage is not limited to fermentation and non-fermentation. A general production process for a beer-taste beverage will be shown hereinbelow. A general beer-taste beverage is one in which malts are used or not used as raw materials, which can be produced in the following manner.

As to the beer-taste beverage containing an alcohol produced using malts as raw materials, first, to a mixture containing raw materials such as wheat such as malts, optionally other grains, starches, sugars, and a bittering agent, or a colorant, and water is added an enzyme such as amylase optionally to carry out gelatinization or saccharification, and the mixture is then filtered, to provide a saccharified liquid. Hops, a bittering agent or the like is optionally added to the saccharified liquid, and a mixture is boiled, to remove solid contents such as coagulated proteins in a clearing tank. As a substitute for this saccharified liquid, hops may be added to a hot water added with a malt extract, and the mixture may be boiled. The hops may be mixed at any stage from the beginning of boiling to before the termination of boiling. As the conditions in the saccharification step, the boiling step, the solid content removal step, and the like, known conditions may be used. As the conditions in the fermentation and storage (stored liquor) steps, known conditions may be used. The fermentation liquid obtained is filtered, and a carbon dioxide gas is added to a filtrate obtained. Thereafter, a vessel is filled, and subjected to a sterilizing step, to obtain an intended beer-taste beverage. At this time, in order to obtain a more preferable flavor as a beer-taste beverage in each of the above steps, an aroma component such as a fatty acid ester, ethyl acetate, or isoamyl acetate may be added in any steps up to filling. In each of the above steps, the carbon dioxide-extracting product may be added in any steps up to filling, and it is preferable that the carbon dioxide-extracting product is added in the step before filtration of the stored liquor, from the viewpoint of the component migration rate.

As to the beer-taste beverage containing an alcohol produced without using malts as raw materials, a liquid sugar containing a carbon source, a nitrogen source as an amino acid-containing material other than wheat or malts, hops, a pigment, and the like are mixed together with a hot water, to provide a liquid sugar-containing solution. The liquid sugar-containing solution is boiled. When hops are used as raw materials, the hops may be mixed with the liquid sugar-containing solution during boiling, not before the beginning of boiling. As a substitute for this saccharified liquid, hops may be added to a hot water added with an extract using raw materials other than malts, and a mixture may be boiled. As the conditions in the fermentation and storage (stored liquor) steps, known conditions may be used. The fermentation liquid obtained is filtered, and a carbon dioxide gas is added to a filtrate obtained. Thereafter, a vessel is filled, and subjected to a sterilizing step, to obtain an intended beer-taste beverage. At this time, in order to obtain a more preferable flavor as a beer-taste beverage in each of the above steps, an aroma component such as a fatty acid ester, ethyl acetate, or isoamyl acetate may be added in any steps up to filling. In each of the above steps, the carbon dioxide-extracting product may be added in any steps up to filling, and it is preferable that the carbon dioxide-extracting product is added in the step before filtration of the stored liquor, from the viewpoint of the component migration rate.

As to the beer-taste beverage which is non-fermented and contains an alcohol, the beer-taste beverage may be one in which an alcohol content of a final manufactured product is adjusted by adding an alcohol for raw materials and the like, irrespective of malts being used or unused. The alcohol for raw materials may be added in any steps from the saccharification step to the filling step. In each of the above steps, in order to obtain a more preferred flavor as the beer-taste beverage, an aroma component such as a fatty acid ester, ethyl acetate, or isoamyl acetate may be added in any steps up to filling. In each of the above steps, the carbon dioxide-extracting product may be added in any steps up to filling, and it is preferable that the carbon dioxide-extracting product is added in the step before filtration of the stored liquor, from the viewpoint of the component migration rate.

One embodiment of the beer-taste beverage according to the present invention includes nonalcoholic beer-taste beverages, which can be produced in the same manner as general nonalcoholic beer-taste beverages except that a carbon dioxide-extracting product obtained in the separating step is added during the production steps of the beer-taste beverage. The production steps for a non-fermented nonalcoholic beer-taste beverage will be shown as follows. A nonalcoholic beer-taste beverage such as a nonalcoholic beer-taste beverage can be easily produced by not having a fermentation step with an yeast. General non-fermented nonalcoholic beer-taste beverages are ones produced using malts as raw materials or ones without using them, and each can be produced as follows.

As to the nonalcoholic beer-taste beverage produced by using malts as raw materials, first, to a mixture of raw materials such as wheat such as malts, optionally other grains, starches, and sugars, and a bittering agent, or a colorant, and water is added an enzyme such as amylase optionally to carry out gelatinization or saccharification, and the mixture is then filtered, to provide a saccharified liquid. Hops, a bittering agent or the like is optionally added to the saccharified liquid, and a mixture is boiled, to remove solid contents such as coagulated proteins in a clearing tank. As a substitute for this saccharified liquid, hops may be added to a hot water added with a malt extract, and a mixture may be boiled. The hops may be mixed at any stage from the beginning of boiling to before the termination of boiling. As the conditions in the saccharification step, the boiling step, the solid content removal step, and the like, known conditions may be used. After boiling, the wort obtained is filtered, and a carbon dioxide gas is added to a filtrate obtained. Thereafter, a vessel is filled, and subjected to a sterilizing step, to obtain an intended nonalcoholic beer-taste beverage. In order to obtain a more preferable flavor as a beer-taste beverage in each of the above steps, an aroma component such as a fatty acid ester, ethyl acetate, or isoamyl acetate may be added in any steps up to filling. In each of the above steps, the carbon dioxide-extracting product may be added in any steps up to filling, and it is preferable that the carbon dioxide-extracting product is added in the step before filtration of the stored liquor, from the viewpoint of the component migration rate.

In the case of producing a nonalcoholic beer-taste beverage without using malts as raw materials, first, a liquid sugar containing a carbon source, a nitrogen source as an amino acid-containing material other than wheat or malts, hops, a pigment, and the like are mixed together with a hot water, to provide a liquid sugar-containing solution. The liquid sugar-containing solution is boiled. When hops are used as raw materials, the hops may be mixed with the liquid sugar-containing solution during boiling, not before the beginning of boiling. A carbon dioxide gas is added to the liquid sugar-containing solution after boiling. Thereafter, a vessel is filled, and subjected to a sterilizing step, to obtain an intended nonalcoholic beer-taste beverage. In order to obtain a more preferable flavor as a beer-taste beverage in each of the above steps, an aroma component such as a fatty acid ester, ethyl acetate, or isoamyl acetate may be added in any steps up to filling. In each of the above steps, the carbon dioxide-extracting product may be added in any steps up to filling, and it is preferable that the carbon dioxide-extracting product is added in the step before filtration of the stored liquor, from the viewpoint of the component migration rate.

The term "beer-taste beverage" as used herein refers to a carbonated beverage having a beer-like flavor. In other words, the beer-taste beverage of the present specification embraces all the carbonated beverages having a beer flavor, unless specified otherwise. Among them, the term "nonalcoholic beer-taste beverage" refers to a beer-taste beverage having an alcoholicity of less than 1%, and preferably does not substantially contain an alcohol. The beverage of the embodiment that substantially does not contain an alcohol does not intend to exclude a beverage containing a very small amount of alcohol to an extent that is undetectable. A beverage of which alcoholicity would be rounded off to 0.0%, and especially a beverage of which alcoholicity is rounded off to 0.00%, is embraced in the nonalcoholic beer-taste beverage of the present invention. The kinds of the beer-taste beverage of the present invention include, for example, nonalcoholic beer-taste beverages, beer-taste refreshing beverages, and the like. Here, the term "alcoholicity (alcohol content)" as used herein means the content of ethanol, but an aliphatic alcohol is not included therein.

The alcoholicity of the beer-taste beverage according to the present invention means a content (v/v%) of an alcoholic content of the beverage, and the alcoholicity can be measured by any of known methods. For example, the alcoholicity can be measured with an oscillating densitometer. Specifically, a sample in which a carbon dioxide gas is degassed from a beverage by filtration or ultrasonication is prepared, and the sample is distilled with direct flame, and a density of the distillated solution obtained is measured at 15°C, and the alcoholicity can be converted and obtained from "Table 2 Alcoholic Content and Density (15°C) and Specific Gravity (15/15°C) Conversion Table" which is an annex to Internal Revenue Bureau, Specified Analysis Method (2007 Internal Revenue Bureau Order No. 6, revised June 22, 2007). In a case of a low concentration with an alcoholicity of less than 1.0%, a commercially available alcohol measurement instrument or gas chromatography may be used.

An aliphatic alcohol may be added to the beer-taste beverage according to the present invention, from the viewpoint of giving a liquor-taste. The aliphatic alcohol is not particularly limited so long as it is a known one, and an aliphatic alcohol having 4 to 5 carbon atoms is preferred. In the present invention, preferred aliphatic alcohols include aliphatic alcohols having 4 carbon atoms such as 2-methyl-1-propanol and 1-butanol; and aliphatic alcohols having 5 carbon atoms such as 3-methyl-1-butanol, 1-pentanol, and 2-pentanol. These aliphatic alcohols can be used alone or in a combination of two or more kinds. The content of the aliphatic alcohol having 4 to 5 carbon atoms is preferably from 0.0002 to 0.0007% by mass, and more preferably from 0.0003 to 0.0006% by mass. In the present specification, the content of the aliphatic alcohol can be measured by using a headspace gas chromatography.

### (Calories)

Among the beer-taste beverages according to the present invention, it is desired that the nonalcoholic beer-taste beverage is low in calories, matching in the favor of low-calorie diets of the recent years. Therefore, the beer-taste beverage according to the present invention has the number of calories of preferably less than 5 kcal/100 mL, more preferably less than 4 kcal/100 mL, and even more preferably less than 3 kcal/100 mL.

The number of calories included in the beer-taste beverage according to the present invention is basically calculated in accordance with "Method for Analyzing and the like Nutrient Ingredients etc. in Nutritional Labelling Standards" published in association with the Health Promotion Act. In other words, in principle, the number of calories can be calculated as a total sum of the amount of the various nutrient ingredients quantified multiplied by an energy conversion coefficient of each component (protein: 4 kcal/g, fat: 9 kcal/g, saccharide: 4 kcal/g, dietary fibers: 2 kcal/g, alcohol: 7 kcal/g, or organic acid: 3 kcal/g). For details, see "Method and the like for Analyzing Nutrient Ingredients etc. in Nutritional Labelling Standards."

Specific measurement methods for the amounts of each of nutrient ingredients contained in the beer-taste beverage according to the present invention may be carried out in accordance with various methods of analyses described in the Health Promotion Act, "Method and the like for Analyzing Nutrient Ingredients etc. in Nutritional Labelling Standards." Alternatively, if requested to Incorporated Foundation, Japan Food Research Laboratories, one can know the calories and/or each of amounts of nutrient ingredients.

### (Saccharides)

The saccharides contained in the beer-taste beverage according to the present invention refer to saccharides based on the Nutritional Labelling Standards for Foods (2003 Ministry of Health, Labour, and Welfare, Announcement No. 176). Specifically, the saccharides refer to a group of foods from which proteins, fats, dietary fibers, ashes, alcohols, and water are excluded. In addition, the amount of saccharides in the foods is calculated by deduction of the amounts of proteins, fats, dietary fibers, ashes, and water from the weight of the above foods. In this case, the amounts of proteins, fats, dietary fibers, ashes, and water are measured by a method set out in the Nutrition Labelling Standards. Specifically, the amount of protein is measured by nitrogen quantification conversion method; the amount of fat is measured by an ether extraction method, a chloroform-methanol liquid mixture extraction method, a Gerber method, an acid decomposition method or a Roese-Gottlieb method; the amount of dietary fibers is measured by high-performance liquid chromatography or Prosky method; the amount of ashes is measured by a method of ashing with magnesium acetate, a direct ashing method, or a method of ashing with sulfuric acid; and the amount of water is measured by Karl-Fischer method, a method using a drying aid, a vacuum thermal drying method, an atmospheric thermal drying method, or a plastic film method.

It is desired that the beer-taste beverage according to the present invention is low in saccharides, matching in the favor of the low carbohydrate diet of the recent year. Therefore, the content of the saccharide of the beer-taste beverage of the present invention is preferably less than 0.5 g/100 mL, more preferably 0.4 g/100 mL or less, and even more preferably 0.3 g/100 mL or less. In addition, the lower limit of the content is, but not particularly set to, usually 0.1 g/100 mL or so, and, for example, the content may be 0.15 g/100 mL or more, or may be 0.2 g/100 mL or more.

### (Acidulant)

As the acidulant used in the beer-taste beverage according to the present invention, it is preferable to use one or more acids selected from the group consisting of citric acid, lactic acid, phosphoric acid, and malic acid. In addition, in the present invention, as an acid other than the above acids, succinic acid, tartaric acid, fumaric acid, glacial acetic acid or the like can be used. These acidulants can be used without limitations so long as the acidulants are accepted to be added to foods. In the present invention, it is preferable to use a combination of lactic acid from the viewpoint of appropriately giving a moderate sour taste, and phosphoric acid from the viewpoint of appropriately giving an sour taste with a slightly stimulating taste.

The content of the acidulant in the beer-taste beverage according to the present invention, calculated in terms of citric acid, is preferably 200 ppm or more, more preferably 550 ppm or more, and even more preferably 700 ppm or more, from the viewpoint of providing a beer-taste feel, and the content is preferably 15000 ppm or less, more preferably 5500 ppm or less, and even more preferably 2000 ppm or less, from the viewpoint of acidity. Therefore, in the present invention, the content of the acidulant, calculated in terms of citric acid, includes preferred ranges such as from 200 ppm to 15000 ppm, preferably from 550 ppm to 5500 ppm, and more preferably from 700 ppm to 1500 ppm. Here, the amount calculated in terms of citric acid as used herein refers to an amount converted from an acidity of each of the acidulants on the basis of the acidity of citric acid. For example, the amount which is equivalent to 100 ppm of lactic acid, calculated in terms of citric acid, is 120 ppm, the amount which is equivalent to 100 ppm of phosphoric acid, calculated in terms of citric acid, is 200 ppm, and the amount which is equivalent to 100 ppm of malic acid, calculated in terms of citric acid, is 125 ppm.

The content of the acidulant in the beer-taste beverage refers to those calculated by analyzing with high-performance liquid chromatography (HPLC) or the like.

### (Hops)

In the beer-taste beverage according to the present invention, hops can be used as a part of the raw materials. Since the flavor tends to resemble beer, it is desired that hops are used in a part of the raw materials. When hops are used, usual pellet hops, powder hops or a hop extract used in the production of beer and the like can be appropriately selected and used in accordance with a desired flavor. In addition, hop processed products such as isomerized hops and reduced hops may be used. The hops used in the beer-taste beverage according to the present invention embrace those products. Also, the amount of the hops is, but not particularly limited to, typically from 0.0001 to 1% by weight or so, based on the entire amount of the beverage.

### (Other Raw Materials)

In the beer-taste beverage according to present invention, other raw materials may be optionally used within the range that would not inhibit the effects of the present invention. For example, a sweetener (including a high-intensity sweetener), a bittering agent, a flavor (aromatic), an yeast extract, a colorant such as a caramel pigment, vegetable extracted saponin-based material such as soybean saponin or quillai saponin, a vegetable protein such as maize or soybeans, and a peptide-containing product, a proteinaceous material such as bovine serum albumin, dietary fibers, a seasoning such as amino acids, or an antioxidant such as ascorbic acid can optionally be used within the range that would not inhibit the effects of the present invention.

In a case where a flavor is added, when linalool, linalool oxide, α-pinene, β-pinene, β-myrcene, limonene, or valencene is contained in the flavor, these contents in the beer-taste beverage are a total amount with those derived from the carbon dioxide-extracting product.

Thus, a beer-taste beverage according to the present invention is obtained. The pH of the beer-taste beverage according to the present invention is from 3.0 to 5.0, preferably from 3.5 to 4.5, and more preferably 3.5 to 4.0, from the viewpoint of making the flavor of the beverage favorable.

### (Container-Packed Beverage)

The beer-taste beverage according to the present invention can be packed into a container. The shapes of the containers are not limited in any manners, and the beer-taste beverage can be packed into a tightly sealed container such as a glass bottle, a can, a barrel, or a plastic bottle, whereby a beverage contained in a container can be provided.

### EXAMPLES

The present invention will be specifically described hereinbelow by the Examples, without intending to limit the scope of the present invention to the following Examples.

### Preparation Examples 1 to 5 of Carbon Dioxide-Extracting Products

Using a carbon dioxide circulation-type apparatus shown in FIG. 1, powdered products of orange peels as raw materials were extracted under the conditions listed in Table 1. The extract obtained was centrifuged to obtain only an oil layer, to provide an orange peel extract. The results are shown in Table 1. Here, the average weight of the extraction oil in Table 1 is an average weight of an oil layer obtained by testing three times at each of the testing conditions.

### Ingredient Analysis of Orange Peel Extracts

The quantification for a particular ingredient in an orange peel extract obtained in the preparation examples for carbon dioxide-extracting products was made by weighing out a carbon dioxide-extracting product, extracted on the basis of a certain weight of the starting raw materials, diluting the extract properly with ethanol and diethanolmethane, and subjecting the dilution to quantification analysis in accordance with GC-MS (SIM method). As the column, VF-WAXms, manufactured by Agilent, 60 m × 250 µm × 0.5 µm, was used. The amount of ingredient, ppm, was calculated from the dilution folds. The results are shown in Table 1.

In addition, as to the mass ratio, %, of a particular ingredient in the orange peel extract, which was calculated in the same manner as in the above "Ingredient Analysis of Orange Peel Extracts," a mass ratio was calculated from a concentration of an extract obtained by steam distillation shown in a literature value, and comparison was made. The results are shown in Table 1. As the "literature value," the values listed in Table 3 of a literature *"*International Food Research Journal 18(4): 1275-1282 (2011)" disclosing the results of subjecting orange peels to steam distillation were used.

### [Table 1]

**Table 1**

| | Preparation Examples | | | | | Literature |
|---|---|---|---|---|---|---|
| | 1 | 2 | 3 | 4 | 5 | |
| Extraction pressure, MPa | 9 | 9 | 15 | 30 | 6.5 | |
| Extraction temperature, °C | 50 | 50 | 50 | 50 | 10 | |
| Separation temperature, °C | 18 | 50 | 18 | 18 | 18 | |
| Separation pressure, MPa | 4.8 | 5.5 | 4.8 | 4.8 | 4.8 | |
| Extraction time, hr | 1.5 | 1.5 | 1.5 | 1.5 | 1.5 | |
| S/F | 45 | 45 | 45 | 45 | 45 | |
| Raw materials used (g) | 1000 | 1000 | 1000 | 1000 | 1000 | |
| CO₂ Density, kg/m³ | 293 | 293 | 702 | 871 | 888 | |
| Average weight of extraction oil, g | 8.28 | 0.92 | 15.97 | 15.08 | 11.71 | |
| Linalool, ppm | 8426 | 11640 | 5737 | 4823 | 4750 | 21000 |
| cis-Linalool oxide, ppm | 54.6 | 73.3 | 70.0 | 78.2 | 60.1 | - |
| trans-Linalool oxide, ppm | 29.1 | 30.9 | 40.1 | 42.2 | 35.6 | - |
| Total of linalool oxides, ppm | 83.7 | 104.2 | 110.1 | 120.3 | 95.8 | 4800 |
| Valencene, ppm | 150167 | 217438 | 84591 | 73605 | 82036 | 4100 |
| Nootkatone, ppm | 1423 | 3595 | 763 | 743 | 706 | 3000 |
| α-Pinene, ppm | 5444 | 2309 | 4792 | 3446 | 4163 | 17700 |
| β-Pinene, ppm | 602 | 300 | 504 | 370 | 433 | - |
| β-Myrcene, ppm | 44025 | 29728 | 33411 | 25877 | 28703 | 37600 |
| Limonene, ppm | 868715 | 863931 | 537272 | 484331 | 560709 | 727000 |
| Linalool oxides / Linalool, % | 0.99 | 0.90 | 1.92 | 2.50 | 2.02 | 22.9 |
| Valencene / Linalool, % | 1782 | 1868 | 1474 | 1526 | 1727 | 19.5 |
| Valencene / Nootkatone, % | 10554 | 6049 | 11081 | 9909 | 11620 | 137 |

Preparation Example 2 is a comparative example and not part of the invention.

In Table 1, as is clear from the comparisons of Preparation Examples 1 and 3 to 5 and Preparation Example 2, the mass ratio of linalool oxides to linalool (linalool oxides / linalool) was low, and the mass ratio of valencene to linalool (valencene / linalool) was high in Comparative Preparation Example 2. On the other hand, in Preparation Examples 1 and 3 to 5 with a low separation temperature, the oils were obtained in an amount from 9 to 17 times that of Preparation Example 2 with a high separation temperature, which were remarkably excellent, from the viewpoint of the amount of yield. In addition, Preparation Examples 1 and 3 to 5 with a low separation temperature had a high mass ratio of valencene to nootkatone (valencene / nootkatone), as compared to that of Comparative Preparation Example 2 with a high separation temperature, so that a stronger juicy taste of orange was obtained than Comparative Preparation Example 2.

In addition, from the comparison of the steam distillation (literature value) and the extraction with carbon dioxide (each preparation example), it could be seen in the extraction with carbon dioxide that the mass ratio of linalool oxides to linalool (linalool oxides / linalool) was low, and that the mass ratio of valencene to linalool (valencene / linalool) and the mass ratio of valencene to nootkatone (valencene / nootkatone) were high.

### Examples 1 to 4

### Preparation of Evaluation Solutions

One hundred grams of 20 mM citrate buffer, pH 5.3, was weighed out in a 200 ml-two-neck flask with angled arm, and an interchangeable Allihn condenser (cooling device) (20°C) was set therein, and the contents were heated to 100°C. As shown in Table 2, an orange peel extract of each of Preparation Examples 1 and 3 to 5 in an amount equivalent to 0.2 g powder weight (raw materials) was added thereto, and a mixture was held for 20 minutes. Thereafter, the mixture was immediately ice-cooled, and a water content evaporated by heating was calculated with a meter, and water of the evaporated amount was added thereto to recover to the weight before heating. Further, the mixture was filtered with a disc filter having a pore size of 0.45 µm, to obtain a filtrate. This filtrate was used as evaluation solutions for Examples 1 to 4.

### Comparative Example 1

### Preparation of Evaluation Solution

One hundred grams of 20 mM citrate buffer, pH 5.3, was weighed out in a 200 ml-two-neck flask with angled arm, and an interchangeable Allihn condenser (cooling device) (20°C) was set therein, and the contents were heated to 100°C. Thereto was supplied 0.2 g of powdered products of orange peels, and the heater was immediately turned off, and the mixture was held for 20 minutes. Thereafter, the mixture was immediately ice-cooled, and a water content evaporated by heating was calculated with a meter, and water of the evaporated amount was added thereto to recover to the weight before heating. Further, the mixture was filtered with a disc filter having a pore size of 0.45 µm, to obtain a filtrate. This filtrate was used as an evaluation solution for Comparative Example 1.

### Sensory Evaluations of Evaluation Solutions

Each of the evaluation solutions of Examples 1 to 4 and Comparative Example 1 was poured into a glass for sensory evaluation, and scoring was carried out on an orange-like juicy aroma and a fresh taste on the basis of the following criteria. All the evaluations were performed on eight individuals, and an average score was calculated. The results are shown in Table 2.

| | |
|---|---|
| 0: | not sensed or tasted at all; |
| 1: | faintly sensed or tasted; |
| 2: | slightly sensed or tasted; |
| 3: | clearly sensed or tasted; |
| 4: | strongly sensed or tasted; and |
| 5: | very strongly sensed. |

### Ingredient Analyses of Evaluation Solutions

The quantification of the ingredients contained in each of the evaluation solution was carried out by concentration with a solid phase extraction and GC-MS (SIM method). To 2.0 g of each evaluation solution was added 3-heptanol so as to have a final concentration of 50 ppb, and one sheet of a solid phase MonoTrap DCC18, manufactured by GL Science was added thereto, and immersed for 30 minutes. MonoTrap was taken out, 200 µL of dichloromethane was added to a cup specialized for MonoTrap extraction, and the mixture was subjected to ultrasonic irradiation for 5 minutes. The dichloromethane solution was collected in a GC vial, and subjected to quantitative analysis according to GC-MS (SIM method). As the column, VF-WAXms manufactured by Agilent, 60 m × 250 µm × 0.5 µm was used. The results of the ingredient quantification for each evaluation solution are shown in Table 2.

### [Table 2]

**Table 2**

| | Ex. | | | | Comp. Ex. |
|---|---|---|---|---|---|
| | 1 | 2 | 3 | 4 | 1 |
| Extract Added | Extract of Prep. Ex. 1 | Extract of Prep. Ex. 3 | Extract of Prep. Ex. 4 | Extract of Prep. Ex. 5 | - |
| Linalool, ppb | 42.7 | 52.2 | 44.4 | 38.4 | 75.4 |
| cis-Linalool oxide, ppb | 1.3 | 4.5 | 5.8 | 3.0 | 18.0 |
| trans-Linalool oxide, ppb | 0.2 | 0.8 | 1.1 | 0.6 | 3.6 |
| Total of linalool oxides, ppb | 1.5 | 5.3 | 6.9 | 3.6 | 21.5 |
| Valencene, ppb | 9.9 | 18.9 | 23.5 | 26.4 | 0.3 |
| Nootkatone, ppb | 7.1 | 8.7 | 7.8 | 6.5 | 6.2 |
| α-Pinene, ppb | 2.9 | 14.9 | 16.1 | 18.0 | 0.4 |
| β-Pinene, ppb | 0.4 | 1.6 | 1.5 | 1.6 | 0.1 |
| β-Myrcene, ppb | 19.7 | 75.5 | 72.7 | 74.2 | 4.3 |
| Limonene, ppb | 1879.8 | 6605.3 | 6535.4 | 6576.3 | 279.6 |
| Linalool oxides / Linalool, % | 3.5 | 10.1 | 15.5 | 9.4 | 28.6 |
| Valencene / Linalool, % | 23.2 | 36.2 | 52.9 | 68.6 | 0.4 |
| Valencene / Nootkatone, % | 140 | 218 | 302 | 408 | 5 |
| Orange-like juicy aroma | 2.0 | 2.5 | 3.0 | 4.0 | 0.2 |
| Fresh taste | 4.0 | 3.0 | 2.8 | 3.0 | 1.4 |

In the evaluation solutions of Examples 1 to 4 to which a carbon dioxide-extracting product was added, an orange-like juicy aroma was obtained and a fresh taste was excellent, as compared to the evaluation solution of Comparative Example 1 in which fruit peels were supplied into a citrate buffer, and the mixture was extracted with heating. Here, in each of Examples and Comparative Example, the evaluation was made using a simulated solution, and the same evaluations can be obtained also for the beer-taste beverages.

### Preparation of Beer-Taste Beverage and Sensory Evaluations

Malts were supplied into a mash kettle to carry out saccharification, and then filtered to remove husks or the like, to give a wort. Next, to a wort obtained, a hop extract and hop pellets were added to boil, to remove solid contents such as coagulated proteins in a clearing tank, to give a clear wort. Next, an yeast was added to the clear wort obtained above to carry out fermentation. A carbon dioxide-extracting product obtained in each preparation example was added to the filtered beer that went through the steps of storage (stored liquor), the mixture after adjustment of a carbon dioxide gas pressure was packed in a bottle, and the contents were subjected to sensory evaluations. As a result, an evident, fresh aroma derived from orange peels and an orange-like juicy flavor could be obtained.

### INDUSTRIAL APPLICABILITY

The present invention provides a beer-taste beverage which is capable of favorably providing an aroma component of a citrus plant and a method for producing the same, which can provide a new taste as luxury products.

### EXPLANATION OF NUMERALS

- 1: an extraction tank;
- 2: an evaporation device;
- 3: a separation tank;
- 4: a condenser;
- 5: a storage tank;
- 6: a cooling device;
- 7: a high-pressure pump; and
- 8: a heat exchanging device.

## Claims

1. A beer-taste beverage, comprising a carbon dioxide-extracting product of a plant raw material comprising fruit peels of a citrus plant,
wherein the mass ratio of a content of valencene to a content of nootkatone in the carbon dioxide-extracting product is 9000% or more.

2. The beer-taste beverage according to claim 1, wherein the plant raw material comprises one or more members selected from the group consisting of orange (*Citrus sinensis*) peels, grapefruit peels, yuzu (*Citrus junos*) peels, lemon peels, lime peels, *Mandarin* (*Citrus unshiu*) peels, daidai (*Citrus aurantium*) peels, kabosu (*Citrus sphaerocarpa*) peels, shequasar (*Citrus depressa*) peels, and Japanese kinkan peels.

3. The beer-taste beverage according to claim 1 or 2, wherein the mass ratio of a content of linalool oxide to a content of linalool in the carbon dioxide-extracting product is 10% or less; preferably
wherein the mass ratio of a content of linalool oxide to a content of linalool in the carbon dioxide-extracting product is 5% or less.

4. The beer-taste beverage according to any one of claims 1 to 3, wherein the plant raw material comprises orange (*Citrus sinensis*) peels.

5. The beer-taste beverage according to any one of claims 1 to 4, wherein the mass ratio of a content of valencene to a content of linalool in the carbon dioxide-extracting product is 1000% or more; preferably
wherein the mass ratio of a content of valencene to a content of linalool in the carbon dioxide-extracting product is 1500% or more.

6. The beer-taste beverage according to any one of claims 1 to 5, wherein the content of valencene in the beer-taste beverage is 5 ppb or more; preferably
wherein the mass ratio of a content of valencene to a content of nootkatone in the beer-taste beverage is 10% or more.

7. A method for producing the beer-taste beverage of any one of claims 1 to 6, said method comprising
extracting step: extracting a plant extract from a plant raw material comprising fruit peels of a citrus plant with carbon dioxide as an extraction solvent,
separating step: separating the plant extract extracted in the extracting step from carbon dioxide, wherein the temperature in the separating step is 30°C or lower, and
adding step: adding a carbon dioxide-extracting product obtained in the separating step during the production steps for a beer-taste beverage.

8. The method for production according to claim 7, wherein the carbon dioxide density in the extracting step is from 200 to 1000 kg/m³.

9. The method for production according to claim 7 or 8, wherein the pressure of carbon dioxide in the extracting step is from 6 to 50 MPa.

10. The method for production according to any one of claims 7 to 9,
wherein the temperature in the separating step is 20°C or lower.

11. The method for production according to any one of claims 7 to 10, wherein the plant raw material comprises one or more members selected from the group consisting of orange (*Citrus sinensis*) peels, grapefruit peels, yuzu (*Citrus junos*) peels, lemon peels, lime peels, *Mandarin* (*Citrus unshiu*) peels, daidai (*Citrus aurantium*) peels, kabosu (*Citrus sphaerocarpa*) peels, shequasar (*Citrus depressa*) peels, and Japanese kinkan peels.

12. The method for production according to any one of claims 7 to 11, wherein the mass ratio of a content of linalool oxide to a content of linalool in the carbon dioxide-extracting product obtained in the separating step is 10% or less; preferably wherein the mass ratio of a content of linalool oxide to a content of linalool in the carbon dioxide-extracting product obtained in the separating step is 5% or less.

13. The method for production according to any one of claims 7 to 12, wherein the plant raw material comprises orange (*Citrus sinensis*) peels.

14. The method for production according to any one of claims 7 to 13, wherein the mass ratio of a content of valencene to a content of linalool in the carbon dioxide-extracting product obtained in the separating step is 1000% or more; preferably
wherein the mass ratio of a content of valencene to a content of linalool in the carbon dioxide-extracting product obtained in the separating step is 1500% or more; more preferably
wherein the mass ratio of a content of valencene to a content of nootkatone in the carbon dioxide-extracting product obtained in the separating step is 1000% or more.

## Patentansprüche

1. Ein Getränk mit Biergeschmack, umfassend ein Kohlendioxid-Extraktionsprodukt aus einem Pflanzenrohmaterial, der Fruchtschalen einer Zitruspflanze umfasst,
wobei das Massenverhältnis eines Gehalts an Valencen zu einem Gehalt an Nootkaton in dem Kohlendioxid-Extraktionsprodukt 9000% oder mehr beträgt.

2. Das Getränk mit Biergeschmack nach Anspruch 1, wobei das Pflanzenrohmaterial ein oder mehrere Mitglieder, ausgewählt aus der Gruppe bestehend aus Orangen(*Citrus* sinensis)-Schalen, Grapefruitschalen, Yuzu(*Citrus junos*)-Schalen, Zitronenschalen, Limettenschalen, Mandarinen(*Citrus unshiu*)*-*Schalen*,* Daidai(*Citrus aurantium*)-Schalen*,* Kabosu(*Citrus sphaerocarpa*)-Schalen*,* Shequasar(*Citrus depressa*)-Schalen und japanischen Kinkan-Schalen, umfasst.

3. Das Getränk mit Biergeschmack nach Anspruch 1 oder 2, wobei das Massenverhältnis eines Gehalts an Linalooloxid zu einem Gehalt an Linalool in dem Kohlendioxid-Extraktionsprodukt 10% oder weniger beträgt; vorzugsweise
wobei das Massenverhältnis eines Gehalts an Linalooloxid zu einem Gehalt an Linalool in dem Kohlendioxid-Extraktionsprodukt 5% oder weniger beträgt.

4. Das Getränk mit Biergeschmack nach einem der Ansprüche 1 bis 3, wobei das Pflanzenrohmaterial Orangen(*Citrus sinensis*)-Schalen umfasst.

5. Das Getränk mit Biergeschmack nach einem der Ansprüche 1 bis 4, wobei das Massenverhältnis eines Gehalts an Valencen zu einem Gehalt an Linalool in dem Kohlendioxid-Extraktionsprodukt 1000% oder mehr beträgt; vorzugsweise
wobei das Massenverhältnis eines Gehalts an Valencen zu einem Gehalt an Linalool in dem Kohlendioxid-Extraktionsprodukt 1500% oder mehr beträgt.

6. Das Getränk mit Biergeschmack nach einem der Ansprüche 1 bis 5, wobei der Gehalt an Valencen in dem Getränk mit Biergeschmack 5 ppb oder mehr beträgt; vorzugsweise
wobei das Massenverhältnis eines Gehalts an Valencen zu einem Gehalt an Nootkaton in dem Getränk mit Biergeschmack 10% oder mehr beträgt.

7. Ein Verfahren zur Herstellung des Getränks mit Biergeschmack nach einem der Ansprüche 1 bis 6, wobei das Verfahren umfasst
Extraktionsschritt: Extrahieren eines Pflanzenextrakts aus einem Pflanzenrohmaterial, das Fruchtschalen einer Zitruspflanze umfasst, mit Kohlendioxid als Extraktionslösungsmittel,
Trennschritt: Trennen des in dem Extraktionsschritt extrahierten Pflanzenextrakts von Kohlendioxid, wobei die Temperatur in dem Trennschritt 30°C oder niedriger beträgt, und
einen Zugabeschritt: Zugabe eines in dem Trennschritt erhaltenen Kohlendioxid-Extraktionsprodukts während der Herstellungsschritte für ein Getränk mit Biergeschmack.

8. Das Verfahren zur Herstellung nach Anspruch 7, wobei die Kohlendioxiddichte in dem Extraktionsschritt 200 bis 1000 kg/m³ beträgt.

9. Das Verfahren zur Herstellung nach Anspruch 7 oder 8, wobei der Kohlendioxiddruck in dem Extraktionsschritt 6 bis 50 MPa beträgt.

10. Das Verfahren zur Herstellung nach einem der Ansprüche 7 bis 9,
wobei die Temperatur in dem Trennschritt 20°C oder niedriger beträgt.

11. Das Verfahren zur Herstellung nach einem der Ansprüche 7 bis 10, wobei das Pflanzenrohmaterial ein oder mehrere Mitglieder, ausgewählt aus der Gruppe bestehend aus Orangen(*Citrus sinensis*)-Schalen, Grapefruitschalen, Yuzu(*Citrus junos*)-Schalen, Zitronenschalen, Limettenschalen, Mandarinen(*Citrus unshiu*)*-*Schalen*,* Daidai(*Citrus aurantium*)-Schalen, Kabosu (*Citrus sphaerocarpa)-*Schalen*,* Shequasar (*Citrus depressa*)-Schalen und japanischen Kinkan-Schalen, umfasst.

12. Das Verfahren zur Herstellung nach einem der Ansprüche 7 bis 11, wobei das Massenverhältnis eines Gehalts an Linalooloxid zu einem Gehalt an Linalool in dem in dem Trennschritt erhaltenen Kohlendioxid-Extraktionsprodukt 10% oder weniger beträgt; vorzugsweise
wobei das Massenverhältnis eines Gehalts an Linalooloxid zu einem Gehalt an Linalool in dem in der Trennstufe erhaltenen Kohlendioxid-Extraktionsprodukt 5% oder weniger beträgt.

13. Das Verfahren zur Herstellung nach einem der Ansprüche 7 bis 12, wobei das Pflanzenrohmaterial Orangen(*Citrus sinensis*)-Schalen umfasst.

14. Das Verfahren zur Herstellung nach einem der Ansprüche 7 bis 13, wobei das Massenverhältnis eines Gehalts an Valencen zu einem Gehalt an Linalool in dem Trennschritt erhaltenen Kohlendioxid-Extraktionsprodukt 1000% oder mehr beträgt; vorzugsweise
wobei das Massenverhältnis eines Gehalts an Valencen zu einem Gehalt an Linalool in dem in dem Trennschritt erhaltenen Kohlendioxid-Extraktionsprodukt 1500% oder mehr beträgt; noch bevorzugter
wobei das Massenverhältnis eines Gehalts an Valencen zu einem Gehalt an Nootkaton in dem in dem Trennschritt erhaltenen Kohlendioxid-Extraktionsprodukt 1000% oder mehr beträgt.

## Revendications

1. Boisson au goût de bière, comprenant un produit d'extraction au dioxyde de carbone d'une matière première végétale comprenant des zestes de fruits d'une plante d'agrumes,
dans laquelle le rapport en masse de la teneur en valencène à la teneur en nootkatone dans le produit d'extraction au dioxyde de carbone est de 9 000 % ou plus.

2. Boisson au goût de bière selon la revendication 1, dans laquelle la matière première végétale comprend un ou plusieurs membres choisis dans le groupe constitué par les zestes d'orange (*Citrus sinensis*), les zestes de pamplemousse, les zestes de yuzu (*Citrus junos*), les zestes de citron, les zestes de citron vert, les zestes de mandarine (*Citrus unshiu*), les zestes de bigaradier (*Citrus aurantium*), les zestes de kabosu (*Citrus sphaerocarpa*), les zestes de shikuwasa (*Citrus depressa*), et les zestes de kumquat.

3. Boisson au goût de bière selon la revendication 1 ou 2, dans laquelle le rapport en masse de la teneur en oxyde de linalool à la teneur en linalool dans le produit d'extraction au dioxyde de carbone est de 10 % ou moins ; de préférence
dans laquelle le rapport en masse de la teneur en oxyde de linalool à la teneur en linalool dans le produit d'extraction au dioxyde de carbone est de 5 % ou moins.

4. Boisson au goût de bière selon l'une quelconque des revendications 1 à 3, dans laquelle la matière première végétale comprend des zestes d'orange (*Citrus sinensis*).

5. Boisson au goût de bière selon l'une quelconque des revendications 1 à 4, dans laquelle le rapport en masse de la teneur en valencène à la teneur en linalool dans le produit d'extraction au dioxyde de carbone est de 1 000 % ou plus ; de préférence
dans laquelle le rapport en masse de la teneur en valencène à la teneur en linalool dans le produit d'extraction au dioxyde de carbone est de 1 500 % ou plus.

6. Boisson au goût de bière selon l'une quelconque des revendications 1 à 5, dans laquelle la teneur en valencène dans la boisson au goût de bière est de 5 ppb ou plus ; de préférence
dans laquelle le rapport en masse de la teneur en valencène à la teneur en nootkatone dans la boisson au goût de bière est de 10 % ou plus.

7. Méthode pour produire la boisson au goût de bière de l'une quelconque des revendications 1 à 6, ladite méthode comprenant :
une étape d'extraction : extraction d'un extrait végétal à partir d'une matière première végétale comprenant des zestes de fruits d'une plante d'agrumes avec du dioxyde de carbone servant de solvant d'extraction,
une étape de séparation : séparation de l'extrait végétal extrait dans l'étape d'extraction du dioxyde de carbone, dans laquelle la température dans l'étape de séparation est de 30 °C ou moins, et
une étape d'addition : addition d'un produit d'extraction au dioxyde de carbone obtenu dans l'étape de séparation durant les étapes de production pour une boisson au goût de bière.

8. Méthode de production selon la revendication 7, dans laquelle la masse volumique du dioxyde de carbone dans l'étape d'extraction est de 200 à 1 000 kg/m³.

9. Méthode de production selon la revendication 7 ou 8, dans laquelle la pression du dioxyde de carbone dans l'étape d'extraction est de 6 à 50 MPa.

10. Méthode de production selon l'une quelconque des revendications 7 à 9, dans laquelle la température dans l'étape de séparation est de 20 °C ou moins.

11. Méthode de production selon l'une quelconque des revendications 7 à 10, dans laquelle la matière première végétale comprend un ou plusieurs membres choisis dans le groupe constitué par les zestes d'orange (*Citrus sinensis*), les zestes de pamplemousse, les zestes de yuzu (*Citrus junos*), les zestes de citron, les zestes de citron vert, les zestes de mandarine (*Citrus unshiu*), les zestes de bigaradier (*Citrus aurantium*), les zestes de kabosu (*Citrus sphaerocarpa*), les zestes de shikuwasa (*Citrus depressa*), et les zestes de kumquat.

12. Méthode de production selon l'une quelconque des revendications 7 à 11, dans laquelle le rapport en masse de la teneur en oxyde de linalool à la teneur en linalool dans le produit d'extraction au dioxyde de carbone obtenu dans l'étape de séparation est de 10 % ou moins ; de préférence
dans laquelle le rapport en masse de la teneur en oxyde de linalool à la teneur en linalool dans le produit d'extraction au dioxyde de carbone obtenu dans l'étape de séparation est de 5 % ou moins.

13. Méthode de production selon l'une quelconque des revendications 7 à 12, dans laquelle la matière première végétale comprend des zestes d'orange (*Citrus sinensis*).

14. Méthode de production selon l'une quelconque des revendications 7 à 13, dans laquelle le rapport en masse de la teneur en valencène à la teneur en linalool dans le produit d'extraction au dioxyde de carbone obtenu dans l'étape de séparation est de 1 000 % ou plus ; de préférence
dans laquelle le rapport en masse de la teneur en valencène à la teneur en linalool dans le produit d'extraction au dioxyde de carbone obtenu dans l'étape de séparation est de 1 500 % ou plus ; mieux encore
dans laquelle le rapport en masse de la teneur en valencène à la teneur en nootkatone dans le produit d'extraction au dioxyde de carbone obtenu dans l'étape de séparation est de 1 000 % ou plus.
